# FASCICULE DE BREVET EUROPEEN

(11) **EP 0 734 211 B1**
(45) Date de publication et mention de la délivrance du brevet: **17.06.1998**
(21) Numéro de dépôt: 95903842.3
(22) Date de dépôt: 15.12.1994
(51) Int. Cl.: A23L 1/36, A23N 12/08

(54) **PROCEDE ET INSTALLATION DE TORREFACTION DE FRUITS OU GRAINES DU GENRE NOIX DE CAJOU, CACAHOUETES, OU ANALOGUES**
VERFAHREN UND ANLAGE ZUM ROSTEN VON FRUCHTEN ODER SAMEN WIE KASCHUNUSSEN, ERDNUSSEN ODER AHNLICHEN
PROCESS AND EQUIPMENT FOR ROASTING FRUIT OR NUTS SUCH AS CASHEW NUTS, PEANUTS AND THE LIKE

(30) Priorité: 15.12.1993 FR 9315320
(43) Date de publication de la demande: 02.10.1996
(73) Titulaire: SOCIETE CIVILE CHENIER, 31300 Toulouse (FR)
(72) Inventeur: CORMOULS-HOULES, Jacky, F-31500 Toulouse (FR)
(74) Mandataire: Morelle, Guy Georges Alain
(86) Numéro de dépôt international: FR9401473
(87) Numéro de publication internationale: WO9516365

(56) Documents cités:
- US-A- 1 872 456
- US-A- 3 528 362
- US-A- 4 938 987

## Description

La présente invention intéresse l'industrie agro-alimentaire et vise plus particulièrement les techniques de préparation par torréfaction des fruits du genre amandes, noix de cajou, noix de pécan, cacahouètes ou analogues, pour les rendre aptes à la consommation. Des produits de cette nature sont généralement employés en alimentation humaine comme accompagnement de boissons apéritives ou entrent dans la composition de certaines préparations culinaires.

Depuis plusieurs années maintenant, les consommateurs, alertés notamment par les nutritionnistes, tendent à diriger leur choix vers des produits dits "allégés", c'est-à-dire présentant principalement une faible teneur en corps gras mais qui conservent néanmoins leurs propriétés organoleptiques. Les graines comestibles du genre amandes, noix de cajou, noix de pécan, cacahouètes ou analogues, réputées pour être naturellement très riches en substances grasses et glucidiques, sont ainsi le plus souvent rangées dans la liste des aliments déconseillés.

De plus, les techniques classiques de préparation de ces produits consistent généralement à immerger les graines dans des bains d'huile chaude, laquelle est utilisée plusieurs fois, ce qui entraîne la formation notamment de triglycérides oxydés en forte proportion.

Les documents US-A-3528362, US-A-4938987 et US-A-1872456 décrivent de procédés de préparation de graines par torréfaction.

L'invention a pour objet un procédé de préparation par torréfaction de fruits ou graines appartenant à cette catégorie, qui permette notamment d'obtenir un produit plus léger c'est-à-dire notablement moins gras et dont les qualités gustatives soient conservées voire améliorées.

Plus précisément, l'invention concerne un procédé de préparation par torréfaction de fruits ou graines du genre amandes, noix de cajou, noix de pécan, cacahouètes ou analogues, consistant à ajouter aux dits fruits ou graines du sel et, éventuellement, d'autres substances d'assaisonnement, avant de leur faire subir la phase de grillage, ce procédé étant remarquable en ce qu'il consiste à ajouter également aux dits fruits ou graines de l'huile alimentaire avant ladite phase de grillage.

Les fruits ou graines sont ainsi simplement aspergés d'huile froide, c'est-à-dire avec une huile qui est à température ambiante, et non plongés dans un bain de friture comme dans la technique la plus ancienne.

Selon d'autres techniques connues, le grillage est opéré à sec et de l'huile est ajoutée seulement au début de la phase de refroidissement du produit torréfié. Ce dernier se trouve alors, au terme du traitement qu'il a subi, recouvert entièrement d'une pellicule plus ou moins épaisse d'huile avant d'être conditionné dans des sachets ou boîtes ce qui le rend peu agréable au toucher lors de sa consommation. En outre, n'étant pas protégées lors de leur passage au four, certaines graines peuvent être carbonisées, ce qui peut se traduire par des pertes non négligeables de matière première.

Avec le procédé de l'invention, l'adjonction d'huile est opérée avant la phase de grillage ce qui permet d'éviter les inconvénients précités et d'améliorer l'aspect "doré" du produit fini. L'huile, en effet, au lieu de stagner à la surface de la graine pénètre lors de la cuisson dans les couches superficielles du produit pour former une croûte de couleur brune qui croque agréablement sous la dent.

Un autre avantage important du procédé de l'invention réside dans le fait qu'il permet de limiter ainsi la quantité d'huile employée et donc de réduire sensiblement la teneur en matières grasses du produit fini. Par rapport au procédé dit du "grillage à sec", qui nécessite l'adjonction d'environ 10 % d'huile à la quantité de graines grillées, le procédé de l'invention ne nécessite que l'apport préalable de 8 % de cette huile dont une fraction est par ailleurs naturellement éliminée lors de la cuisson.

Selon une autre caractéristique avantageuse du procédé de l'invention, l'addition de sel et l'addition d'huile sont opérées séparément, avant le passage au four des graines, ce qui permet de moduler les quantités respectives de ces ingrédients en fonction de la nature du produit traité ou du résultat que l'on cherche à obtenir.

L'addition de sel et d'huile avant le grillage, présente l'appréciable avantage d'améliorer l'adhésion des particules de sel à la surface des graines et d'éviter ainsi qu'une importante quantité de sel ne se retrouve au fond des sachets d'emballage comme on peut souvent le constater avec les produits de l'art antérieur.

Il a en outre été observé que pour obtenir des qualités gustatives pour le moins comparables à celles des produits préparés selon la technique antérieure, il était possible avec le procédé de l'invention de réduire sensiblement les quantités de sel employées. A titre d'exemple, pour la préparation de 4 tonnes de noix de cajou, on utilisera avec le procédé de l'invention, 75 litres d'huile végétale et 60 kilogrammes de sel dont les grains ont des dimensions de l'ordre de 170 µm.

Selon d'autres aspects avantageux du procédé de l'invention, la phase de grillage est opérée à une température non supérieure à 180°C, ceci pendant 5 minutes environ, alors que la technique antérieure de "grillage à sec" requiert une température de cuisson d'au moins 180 °C et un temps de cuisson supérieur à 5 minutes.

Les caractéristiques exposées ci-dessus entraînent des économies substantielles d'énergie et de temps qui, avec les économies réalisées sur les ingrédients employés, permettent de réduire dans une proportion notable le prix de revient du produit fini.

Des études, conduites notamment sur la cacahouète, ont démontré que les produits obtenus avec le procédé de l'invention contenaient une quantité moindre de benzopyrène que ceux préparés selon la technique classique du bain de friture, présentaient un degré moindre d'acidité et offraient une meilleure résistance à l'oxydation.

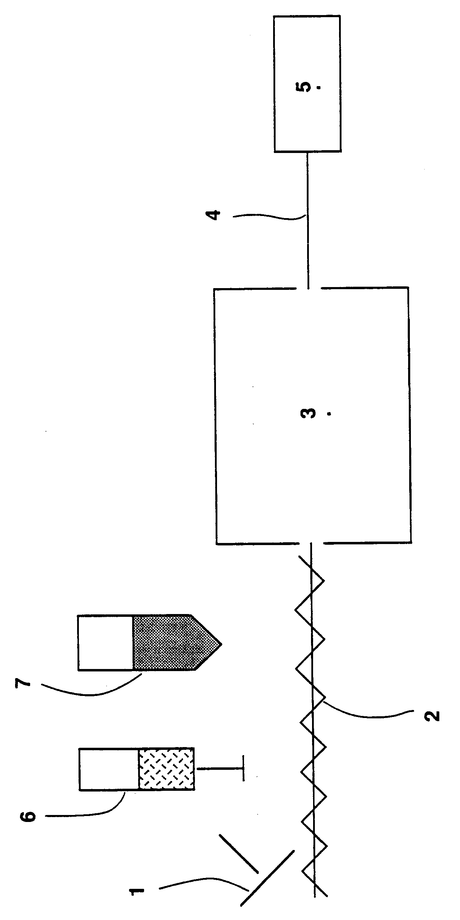

L'invention a également pour objet une installation permettant de mettre en oeuvre le procédé qui vient d'être décrit. Un exemple de réalisation d'une telle installation est illustré de manière schématique dans le dessin annexé.

L'installation représentée comporte classiquement une trémie 1 d'alimentation en graines qui sont déversées par gravité sur un convoyeur 2 pour être amenées vers un four 3. Une zone de refroidissement jouxte la sortie de ce four, cette zone étant simplement constituée par un convoyeur à bande 4 qui conduit les graines torréfiées vers un poste de conditionnement 5.

Conformément aux principes de l'invention énoncés plus avant, cette installation comporte un moyen de distribution d'huile 6 et un moyen de distribution de sel 7 disposés en entrée du four 3 en association avec le convoyeur à vis sans fin 2. De préférence, et comme on peut l'observer, ce convoyeur est constitué d'une vis sans fin qui permet de brasser les graines pendant leur transport et de les enrober intimement avec l'huile et le sel déversés par les moyens de distribution 6 et 7.

On observera par ailleurs que pendant leur transport vers le four 3, les fruits ou graines pourront perdre naturellement l'excédent d'huile qui les recouvre, ceci par simple égouttage.

Le moyen de distribution d'huile est, dans l'exemple illustré, simplement formé d'un réservoir muni d'une rampe d'aspersion, le moyen de distribution de sel étant quant-à lui formé d'un récipient équipé d'un dispositif pneumatique de pulvérisation.

## Revendications

1. Procédé de préparation par torréfaction de fruits ou graines du genre amandes, noix de cajou, noix de pécan, cacahouètes ou analogues, consistant à ajouter aux dits fruits ou graines du sel et, éventuellement, d'autres substances d'assaisonnement, avant de leur faire subir la phase de grillage, ***caractérisé en ce qu'***il consiste à ajouter également aux dits fruits ou graines de l'huile alimentaire avant ladite phase de grillage.

2. Procédé selon la Revendication 1, ***caractérisé en ce que*** l'huile est ajoutée à température ambiante.

3. Procédé selon la Revendication 1 ou 2, ***caractérisé en ce que*** l'huile est ajoutée dans une proportion de 8 % du volume de fruits ou graines traités.

4. Procédé selon l'une quelconque des Revendications 1 à 3, ***caractérisé en ce que*** l'addition de sel et l'addition de l'huile sont opérées séparément.

5. Procédé selon l'une quelconque des Revendications 1 à 4, ***caractérisé en ce que*** la phase de grillage est opérée à une température non supérieure à 180 °C.

6. Procédé selon la Revendication 5, ***caractérisé en ce que*** la phase de grillage a une durée sensiblement égale à 5 minutes.

7. Installation pour la mise en oeuvre du procédé selon l'une quelconque des Revendications 1 à 6, comportant principalement des moyens d'alimentation (1) en fruits ou graines à torréfier, des moyens de convoyage (2) desdits fruits vers des moyens de grillage (3), ***caractérisée en ce qu'***elle comprend en outre des moyens de distribution (6, 7) de sel et d'huile en entrée desdits moyens de grillage.

8. Installation selon la Revendication 7, ***caractérisée en ce que*** lesdits moyens de distribution sont associés aux dits moyens de convoyage.

9. Installation selon la Revendication 8, ***caractérisée en ce que*** lesdits moyens de de convoyage comprennent une vis sans fin (2).

## Claims

1. Process for preparing, by roasting, fruit or nuts such as almond, cashew nut, pecan nut or peanut and the like, consisting in adding to the said fruit or nuts salt and optionally other seasoning substances before subjecting them to the roasting phase, **characterized in that** it consists in also adding to the said fruit or nuts edible oil before the said roasting phase.

2. Process according to Claim 1, **characterized in that** the oil is added at room temperature.

3. Process according to Claim 1 or 2, **characterized in that** the oil is added in a proportion of 8% of the volume of fruit or nuts treated.

4. Process according to any one of Claims 1 to 3, **characterized in that** the addition of salt and the addition of oil are carried out separately.

5. Process according to any one of Claims 1 to 4, **characterized in that** the roasting phase is carried out at a temperature not greater than 180°C.

6. Process according to Claim 5, **characterized in that** the duration of the roasting phase is substantially equal to 5 minutes.

7. Plant for carrying out the process according to any one of Claims 1 to 6, comprising mainly means (1) for supplying fruit or nuts to be roasted, means (2) for conveying the said fruit to the roasting means (3), **characterized in that** it comprises, in addition, means (6, 7) for distributing salt and oil at the inlet of the said roasting means.

8. Plant according to Claim 7, **characterized in that** the said distributing means are linked to the said conveying means.

9. Plant according to Claim 8, **characterized in that** the said conveying means comprise an endless screw (2).

## Patentansprüche

1. Verfahren zum Zubereiten durch Rösten von Früchten oder Samen wie Mandeln, Kaschunüssen, Peka- bzw. Pekannüssen, Erdnüssen oder ähnlichen, darin bestehend, daß den Früchten oder Samen Salz und gegebenenfalls weitere Würzstoffe hinzugefügt werden, bevor sie die Röstphase durchlaufen,
dadurch gekennzeichnet, daß es darin besteht, daß den Früchten oder Samen vor der Röstphase ebenfalls Speiseöl hinzugefügt wird.

2. Verfahren nach Anspruch 1,
dadurch gekennzeichnet, daß das Öl bei Umgebungstemperatur hinzugefügt wird.

3. Verfahren nach Anspruch 1 oder 2,
dadurch gekennzeichnet, daß das Öl in einem Verhältnis von 8 % des Volumens der behandelten Früchte oder Samen hinzugefügt wird.

4. Verfahren nach einem der Ansprüche 1 bis 3,
dadurch gekennzeichnet, daß die Zugabe von Salz und die Zugabe von Öl getrennt erfolgen.

5. Verfahren nach einem der Ansprüche 1 bis 4,
dadurch gekennzeichnet, daß die Röstphase bei einer Temperatur erfolgt, die 180 °C nicht überschreitet.

6. Verfahren nach Anspruch 5,
dadurch gekennzeichnet, daß die Röstphase eine Dauer von im wesentlichen gleich 5 Minuten hat.

7. Anlage zur Durchführung des Verfahrens nach einem der Ansprüche 1 bis 6,
im wesentlichen aufweisend Mittel (1) zum Zuführen von zu röstenden Früchten oder Samen, Mittel (2) zum Transportieren der Früchte in Richtung auf Röstmittel (3),
dadurch gekennzeichnet, daß sie ferner Mittel (6, 7) zum Verteilen von Salz und Öl am Eingang der Röstmittel aufweist.

8. Anlage nach Anspruch 7,
dadurch gekennzeichnet, daß die Verteilungsmittel an die Transportmittel angeschlossen sind.

9. Anlage nach Anspruch 8,
dadurch gekennzeichnet, daß die Transportmittel eine Schraube (2) ohne Ende aufweisen.
